# EUROPEAN PATENT APPLICATION

(11) **EP 1 307 046 A2**
(43) Date of publication of application: **02.05.2003**
(21) Application number: 02257292.9
(22) Date of filing: 21.10.2002
(51) Int. Cl.: H04N 5/44

(54) **Storage medium adaptable to changes in screen aspect ratio and reproducing method thereof**

(30) Priority: 25.10.2001 KR 2001066015; 11.03.2002 KR 2002012978
(71) Applicant: SAMSUNG ELECTRONICS CO., LTD., Suwon-City, Kyungki-do (KR)
(72) Inventor: Chung, Hyun-kwon, Gwangju-gun, Gyeonggi-do (KR); Jung, Kil-Soo, Hwaseong-gun, Gyeonggi-do (KR); Kim, Byung-jun, Suwon-si, Gyeonggi-do (KR)
(74) Representative: Robinson, Ian Michael

(57) **Abstract**

A storage medium adaptable to changes in a screen aspect ratio and a reproducing method thereof are provided. The storage medium provides various information and audio/video contents that are displayable in a user interactive environment, and includes interactive screen display files (331-334) that correspond to different screen aspect ratios, respectively. The interactive screen display files (331-334) are each constituted to be adjusted to corresponding screen aspect ratio. Thus, interactive information can be displayed without distorting the position and size thereof even when a screen of a predetermined size is changed into another screen of a different size.

## Description

The present invention relates to a storage medium, which is capable of displaying an interactive screen, and a reproducing method thereof, and more particularly, to a storage medium, which has interactive file structures that are adaptable to different screen aspect ratios, respectively, and a reproducing method thereof.

In general, a storage medium records audio/video (A/V) and user-defined information. A/V contents refer to contents that are substantially provided by the storage medium, and the user-defined information refers to specific information that is prescribed by a producer. The A/V contents of the storage medium are reproduced by a stationary reproducing apparatus, and the user-defined information may be accessed by a computer and the like.

Recently, a storage medium, which is operable in web-based environment consisting of hypertext markup language (HTML) and enabling a user-interactive display including network links, has been launched. The storage medium is called a "storage medium". When reproducing a storage medium, a user can see an interactive screen that displays tools, texts, or images that have basic A/V contents and allow the user to link to a network and search the network.

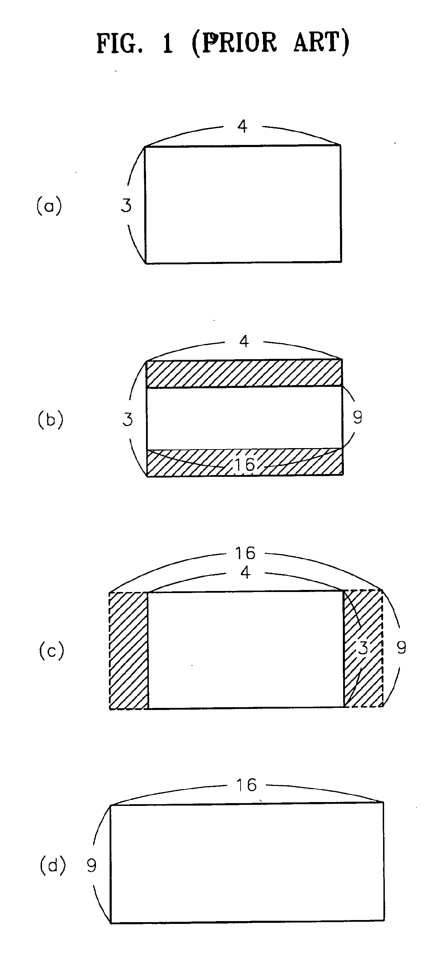

Figure 1 shows the kinds of screens displayable when reproducing a storage medium. Figure 1 (a) shows an example of a screen having a 4:3 aspect ratio (hereinafter referred to as "4:3N"). Figure 1 (b) shows an example of a 4:3 letter-box screen (hereinafter referred to as "4:3L") where parts with slanted lines are created at the top and bottom of the screen by applying 16:9 screen information to the screen. Figure 1 (c) shows an example of a 4:3 pan-scan screen, which is created to overcome a disadvantage that a letterbox screen is displayed too small. When 16:9 screen information is applied to a 4:3 screen, information of both sides of the screen that is relatively less important is cut out, resulting 4:3 pan screen. There is a great difference in the esthetics of image according to an editor's skill when displaying an image on a screen using this method.

Figure 1 (d) shows an example of a 16:9 screen (hereinafter referred to as "16:9W").

A conventional storage medium is reproduced only on one of the screens shown in Figures 1 (a) through (d). In this case, when an HTML file suitable for any one of the screens in the storage medium is displayed on another screen having a different screen aspect ratio, data, such as texts or graphics, are partially distorted.

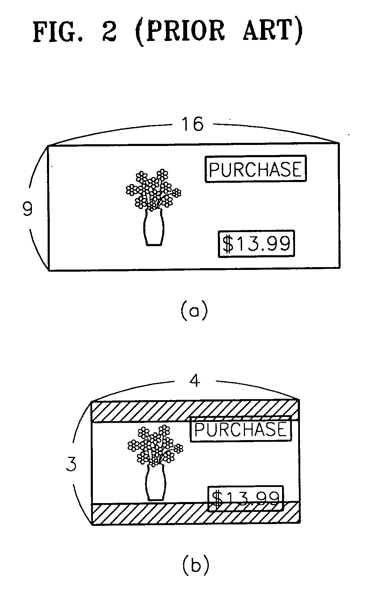

Figure 2 shows examples of the distortion when a storage medium having a HTML file enabling to be display on 16:9W is displayed on a 4:3L screen.

Figure 2 (a) shows information displayed on a 16:9W screen, and Figure 2 (b) shows information of Figure 2 (a) displayed on a 4:3L screen. In Figure 2 (b), video data shrink and texts or graphics created by HTML and the like are partially mislocated, which results in the distortion of the 4:3L screen. In some case, a portion of the texts or graphics overlapping the black areas of a screen may not show.

As described above, in the conventional storage medium and an apparatus and a method for reproducing the same, when a screen display mode is changed from one screen to another screen display, a distortion of displayed data happens to occur.

As a result, it is an aim of the present invention to provide a storage medium and a reproducing method to fix the distortion of the position and size of data to be displayed when a screen display mode is changed from one screen to another screen display mode during reproducing the screen.

According to a first aspect of the present invention there is provided a storage medium providing various information and audio/video contents that are displayable in a user interactive environment, the storage medium comprising: interactive screen display files that correspond to different screen aspect ratios, respectively, wherein the interactive screen display files are constituted to be adjusted to corresponding screen aspect ratios.

Preferably the storage medium comprises a screen information file which provides interactive screen information including displayable screen aspect ratio information.

Preferably, each interactive screen display file includes link tags which are linked to the other interactive screen display files, so that a screen aspect ratio mode being displayed is readily changeable to another aspect screen aspect ratio mode.

Preferably, the interactive screen display files are constituted in the forms that are respectively displayable in a 16:9 screen, 4:3 screen, 4:3 letter-box screen, and 4:3 pan-scan screen.

Preferably, the interactive screen display files are markup language-based document files.

Preferably, the storage medium is arranged such that, in use, an interactive screen display file predetermined in a reproducer is searched from amongst the interactive screen display files to constitute an interactive screen that is suitable for a screen aspect ratio corresponding to the searched screen aspect ratio.

In another embodiment, preferably, the storage medium comprises directories which respectively correspond to different screen aspect ratios, each directory containing one or more of the interactive screen display files constituted to be adjusted to the screen aspect ratio of the directory containing the interactive screen display file. Preferably, the directories are for a 16:9 screen, a 4:3 screen, a 4:3 letter-box screen, and a 4:3 pan-scan screen, respectively. Preferably screen display files in the directories have the same file name.

Preferably, the storage medium is arranged such that in use a directory having a screen aspect ratio predetermined in a reproducer is searched from the directories, a interactive screen file is read from the searched directory, and an interactive screen suitable for an aspect ratio corresponding to the predetermined screen aspect ratio is constituted from the read screen display file.

In one preferred embodiment of the invention there is provided a storage medium providing various information and audio/video contents that are displayable in a user interactive environment. The storage medium includes interactive screen display files that correspond to different screen aspect ratios, respectively. The interactive screen display files are constituted to be adjusted to corresponding screen aspect ratios.

It is preferable that the interactive screen display files are constituted in the forms that are respectively displayable in a 16:9 screen, 4:3 screen, 4:3 letter-box screen, and 4:3 pan-scan screen.

It is preferable that the interactive screen display files are markup language-based document files.

In a second preferred embodiment of the invention there is provided a storage medium providing various information and audio/video contents that are displayable in a user interactive environment. The storage medium includes a screen information and directories. The screen information file provides interactive screen information including displayable screen aspect ratio information. The directories respectively correspond to screen aspect ratios that are designated in the screen information file. One is searched from the directories when reproducing the storage medium, a screen display file is read from the searched directory, and an interactive screen which is suitable for a screen aspect ratio corresponding to the read screen display file is constituted.

It is preferable that the directories are for a 16:9 screen, a 4:3 screen, a 4:3 letter-box screen, and a 4:3 pan-scan screen, respectively.

It is preferable that the screen display files in the directories are markup language-based document files.

It is preferable that screen display files in the directories have the same file name.

In a third preferred embodiment of the invention there is provided a storage medium providing various information and audio/video contents that are displayable in a user interactive environment. The storage medium includes different screen aspect ratio files. A screen aspect ratio file predetermined in a reproducer is searched from the files to constitute an interactive screen that is suitable for a screen aspect ratio corresponding to the searched screen aspect ratio.

It is preferable that the files are for a 16:9 screen, a 4:3 screen, a 4:3 letter-box screen, and a 4:3 pan-scan screen, respectively.

It is preferable that the files are markup language-based document files.

Preferably, the files include link tags which are linked to the other files so that a screen aspect ratio mode being displayed is changed to another screen aspect ratio mode.

In a fourth preferred embodiment of the invention there is provided a storage medium providing various information and audio/video contents that are displayable in a user interactive environment. The storage medium includes directories which have different screen aspect ratio. When producing, a directory having a screen aspect ratio predetermined in a reproducer is searched from the directories, a screen display file read from the searched directory, and an interactive screen suitable for an aspect ratio corresponding to the read screen display file is constituted.

It is preferable that the directories are for a 16:9 screen, a 4:3 screen, a 4:3 letter-box screen, and a 4:3 pan-scan screen, respectively.

It is preferable that the screen display files are markup language-based document files.

It is preferable that the screen display files in the directories have the same file name.

In a fifth preferred embodiment there is provided a storage medium providing various information and audio/video contents that are displayable in a user interactive environment. The storage medium includes a screen information file which provides interactive screen information including displayable screen aspect ratio information, and files which have different screen aspect ratios included in the screen information file. One is searched from the files designated in the screen information file when reproducing the storage medium and an interactive screen suitable for a screen aspect ratio corresponding to the searched file is constituted.

It is preferable that the files are for a 16:9 screen, a 4:3 screen, a 4:3 letter-box screen, and a 4:3 pan-scan screen, respectively.

It is preferable that the files are markup language-based document files.

It is preferable that the files include link tags which are linked to the other files so that a screen aspect ratio mode being displayed is changed to another screen aspect ratio mode.

According to a second aspect of the invention there is provided a method of reproducing a storage medium including screen display files which realize interactive environments so as to be adjusted to various screen sizes. A display screen aspect ratio set in a reproducer is read. A screen display file having the screen aspect ratio is read from the storage medium and an interactive screen is displayed based on the screen display file.

When reading the screen display file and displaying the interactive screen, a screen information file is read from the storage medium, a screen aspect ratio directory having a screen aspect ratio set in the reproducer is searched from the screen information file, and a screen display file in the searched screen aspect ratio directory is read and an interactive screen is displayed based on the screen display file.

When reading the screen display file and displaying the interactive screen, the screen display file set in the reproducer is searched and read from the storage medium and the interactive screen is displayed based on the screen display file name.

Preferably, when reading the screen display file and displaying the interactive screen, a screen mode directory set in the reproducer is searched from the storage medium and a screen display file in the searched screen mode directory is read and an interactive screen is displayed based on the screen mode directory.

Preferably, when reading the screen display file and displaying the interactive screen, a screen information file is read from the storage medium, a screen aspect ratio file having a screen aspect ratio set in the reproducer is searched and read from the screen information file, and an interactive screen is displayed based on the screen aspect ratio file.

It is preferable that the screen display files have forms which each display interactive information on a 4:3 screen, a 4:3 letter-box screen, and a 4:3 pan-scan screen.

Also according to the present invention there is provided a method of reproducing a storage medium including screen display files which realize interactive environments so as to be adjusted to various screen sizes. A display screen aspect ratio set in a reproducer is read. A screen display file corresponding to the display screen aspect ratio is searched and read and a screen is displayed based on the screen display file. Here, the screen display file includes link tags which are linked to the other screen aspect ratio files having the other screen aspect ratio modes so that a screen aspect ratio mode being displayed is changed to another screen aspect ratio mode.

It is preferable that the screen display files have forms which each display interactive information on a 4:3 screen, a 4:3 letter-box screen, and a 4:3 pan-scan screen.

For a better understanding of the invention, and to show how embodiments of the same may be carried into effect, reference will now be made, by way of example, to the accompanying diagrammatic drawings in which:
Figure 1 is views showing different kinds of screens that are displayable when reproducing a storage medium;
Figure 2 is views explaining an example of the distortion of a 4:3L screen when a storage medium having a HTML file being displayable on a 16:9W screen is displayed on the 4:3L screen;
Figures 3A through 3D are views of embodiments of different file structures of a storage medium that supports changes in a screen aspect ratio according to the present invention;
Figure 4 is a flowchart of a preferred method of reproducing the storage medium which supports the change of screen ratio according to the present invention;
Figures 5 (a) and (b) are views showing that screen mode structure information (a navigation file, DVD_ENAV.IF0) provides directory path information of screen modes and either support or no support for the screen modes; and
Figure 6 is a flowchart of a preferred method of reproducing the storage medium, having its structure shown in Figure 3 according to a second embodiment of the present invention.

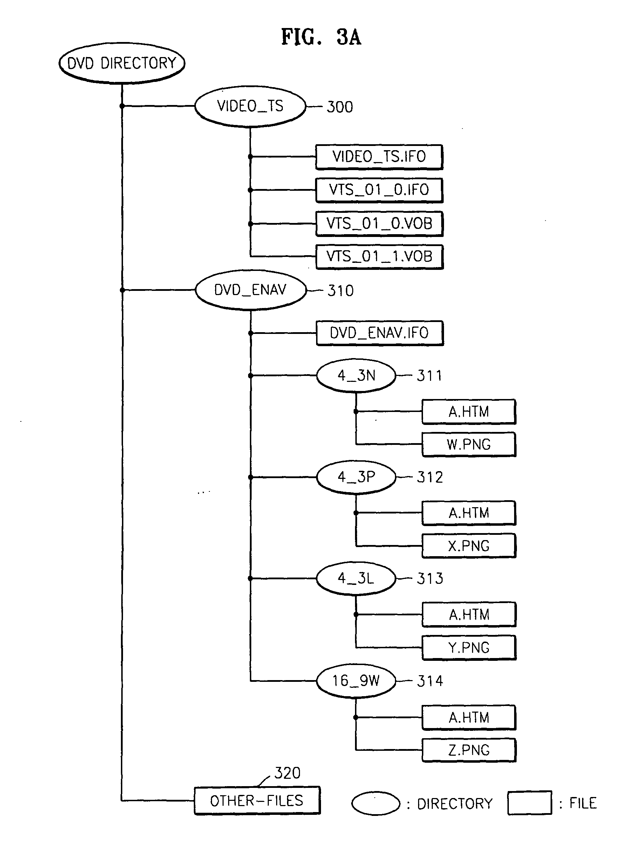

Figure 3A is a view of a first embodiment of a file structure of a storage medium that supports changes in a screen aspect ratio according to a preferred embodiment of the present invention. Referring to Figure 3A, the storage medium has a directory structure, which is represented by in this example as a digital versatile disc (DVD). The storage medium includes a video directory 300, an interactive directory 310, and other-files 320. The video directory 300 has video/audio contents related to screen display information and information files therefor. The interactive directory 310 includes files which are of markup language-based (such as hypertext markup language (HTML)) documents, and enable to constitute a user interactive screen such as a browser screen. The other files 320 stores other information.

The video directory 300 (which is represented by VIDEO_TS) includes a navigation file that navigates a file necessary for reproducing video/audio information, a video title set managing file, an video title menu file, a A/V contents file to be reproduced, and the like.

The interactive directory 310 (which is represented by DVD_ENAV) includes files which are composed of markup language-based (such as HTML) documents, and provide a user interactive function, an information search function via a network, and a website link function. The interactive directory 310 includes various screen mode directories having files that adjust a picture to screens each having predetermined screen aspect ratios. These screen mode directories are a 4_3N 311, a 4_3P 312, a 4_3L 313, and a 16_9W 314.

The 4_3N 311 includes a file(s) that adjust(s) an interactive screen to a general screen having a 4:3 screen aspect ratio.

The 4_3P 312 includes a file(s) that adjust(s) a 16:9 interactive screen to a 4:3 screen by cutting unnecessary both sides of the 16:9 interactive screen.

The 4_3L 313 includes a file(s) that adjust(s) a 16:9 interactive picture to a 4:3 screen.

The 16_9W 314 includes files that adjust an interactive screen to a 16:9 screen.

The above-described screen mode directories respectively have files with the same screen display file name A.HTM. Thus, when one screen mode needs to be changed to another screen mode, an interactive screen display file having the same file name can be found from another screen mode directory so as to simply change the display mode. Since the interactive file A.HTM in each screen mode directory includes other screen mode information, when the user selects another screen mode in an interactive screen having any screen mode, the present screen mode can be changed into the selected screen mode.

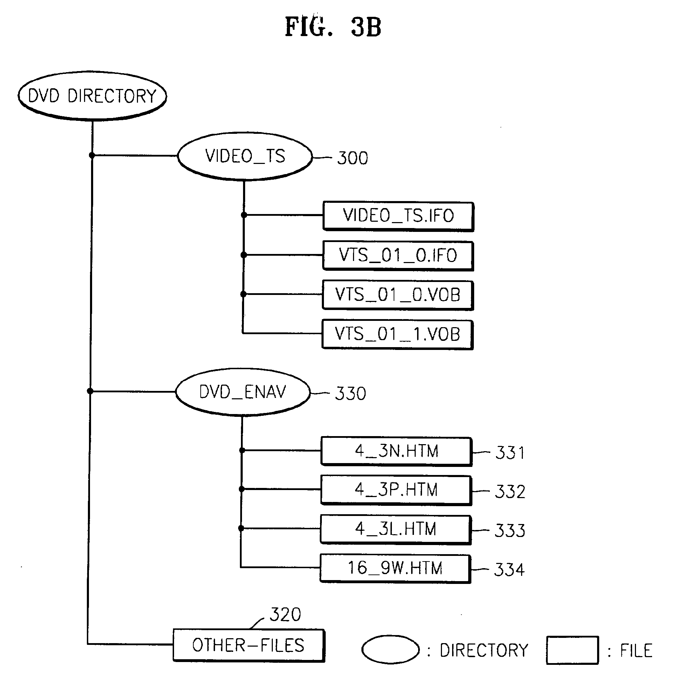

Figure 3B is a view of a second embodiment of the directory structure of the storage medium that supports changes in a screen aspect ratio according to the present invention. Referring to Figure 3B, the storage medium (in this example a DVD) has a directory structure. The storage medium includes a video directory 300, an interactive directory 330, and other-files 320. The video directory 300 has video/audio contents related to screen display information and information files therefor. The interactive directory 330 includes files which are of markup language-based (such as hypertext markup language (HTML)) documents and enable to constitute a user interactive screen such as a browser screen. The other-files 320 store other information.

The video directory 300 and the other-files 320 are the same as those described with reference to Figure 3A, and thus only the interactive directory 330 will be described.

The interactive directory 330 (which is represented by DVD_ENAV) includes interactive screen mode files that adjust a picture to screens having different screen aspect ratios. These interactive screen mode files are a 4_3N.HTM 331, a 4_3P.HTM 332, a 4_3L.HTM 333, and a 16_9W.HTM 334.

The 4_3N.HTM 331 is a file that adjusts an interactive screen to a general screen having a 4:3 screen aspect ratio.

The 4_3P.HTM 332 is a file that adjusts a 16:9 interactive screen to a 4:3 screen by cutting unnecessary both sides of the 16:9 picture.

The 4_3L.HTM 333 is a file that adjusts a 16:9 interactive picture to a 4:3 screen.

The 16_9W.HTM 334 is a file that adjusts an interactive screen to a 16:9 screen.

The above-described screen mode files each include link tag information therein that is linked to other screen mode files so that an aspect ratio of the interactive screen can be changed to another aspect ratio.

For example, the 4_3N.HTM file 331 has to include the following link tags therein.
<link rel = "aspect_ratio_43P" src = "dvd://dvd_enav/4_3P.HTM">
<link rel = "aspect_ratio_43L" src = "dvd://dvd_enav/4_3L.HTM">
<link rel = "aspect_ratio_169W" src = "dvd://dvd_enav/16_9W.HTM">

A user can change a 4:3N aspect ratio of an interactive screen constituted by the 4_3N.HTM file 331 to a 4:3P, a 4:3L, or a 16:9W interactive screen mode by using the link tags. In other words, when the user selects "aspect_ration_169W" from the link tags, a current interactive screen mode can be reconstituted by the 16_9W.HTM file.

When reproducing the storage medium having the directory structure shown in Figure 3B, a reproducer selects one from files in the interactive directory of the storage medium according to a predetermined screen display file name to configure an interactive screen.

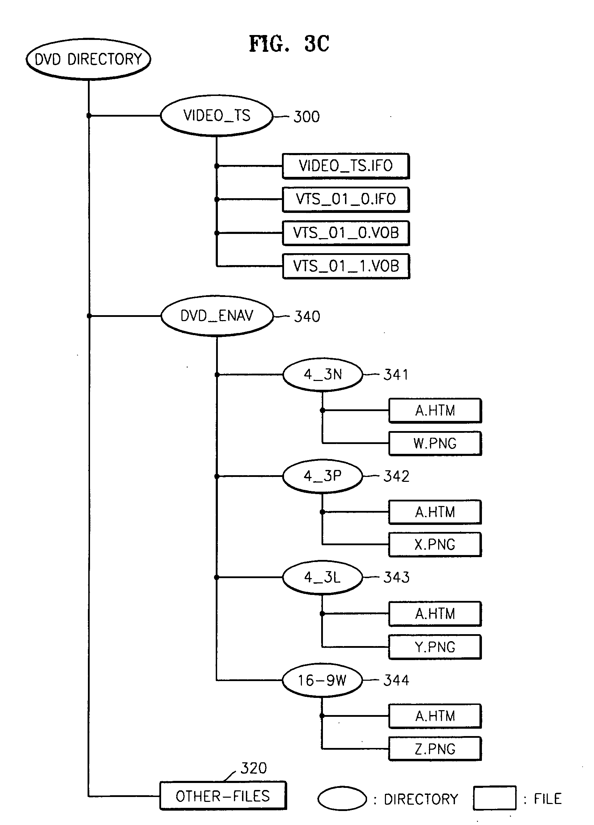

Figure 3C is a view of a third embodiment of a directory structure of the storage medium that supports changes in a screen aspect ratio according to the present invention. Referring to Figure 3C, the storage medium (herein, DVD) has a directory structure. The storage medium includes a video directory 300, an interactive directory 340, and other-files 320. The video directory 300 has video/audio contents related to screen display information and information files therefor. The interactive directory 340 includes files which are of markup language-based (such as hypertext markup language (HTML)) documents and enable to constitute a user interactive screen such as a browser screen. The other-files 320 store other information.

The video directory 300 (which is represented by VIDEO_TS) and the other files 320 are the same as those described with reference to Figure 3A, and thus their descriptions will be omitted.

The interactive directory 340 includes files which are composed of markup language-based (such as HTML) documents, and provide a user interactive function, an information search function via a network, and a website link function. The interactive directory 340 includes various screen mode directories each having files that adjust a picture to screens having different screen aspect ratios. These screen mode directories may be a 4_3N 341, a 4_3P 342, a 4_3L 343, and a 16_9W 344. After the reproducer predetermines which one of the interactive directories 340 will be designated in the reproducer, the reproducer searches for a predetermined corresponding directory, searches for a predetermined start file (e.g., A.HTM) in the corresponding directory, and constitutes an interactive screen.

The 4_3N 341 is a directory including a file(s) that adjust(s) an interactive screen to a general screen having a 4:3 screen aspect ratio.

The 4_3P 342 is a directory including a file(s) that adjust(s) a 16:9 interactive screen to a 4:3 screen by cutting unnecessary both sides of the 16:9 picture.

The 4_3L 343 is a directory including a file(s) that adjust(s) a 16:9 interactive picture to a 4:3 screen.

The 16_9W 344 is a directory including files that adjust an interactive screen to a 16:9 screen.

The above-described screen mode directories each have files with the same screen display file name, e.g., A.HTM. Thus, when one screen mode needs to be changed to another screen mode, an interactive screen display file having the same file name can be found from another screen mode directory so as to simply change the display mode. Since the interactive file A.HTM in each screen mode directory includes other screen mode information, when the user selects another screen mode in an interactive screen having any screen mode, the user can move to a directory of the selected screen mode.

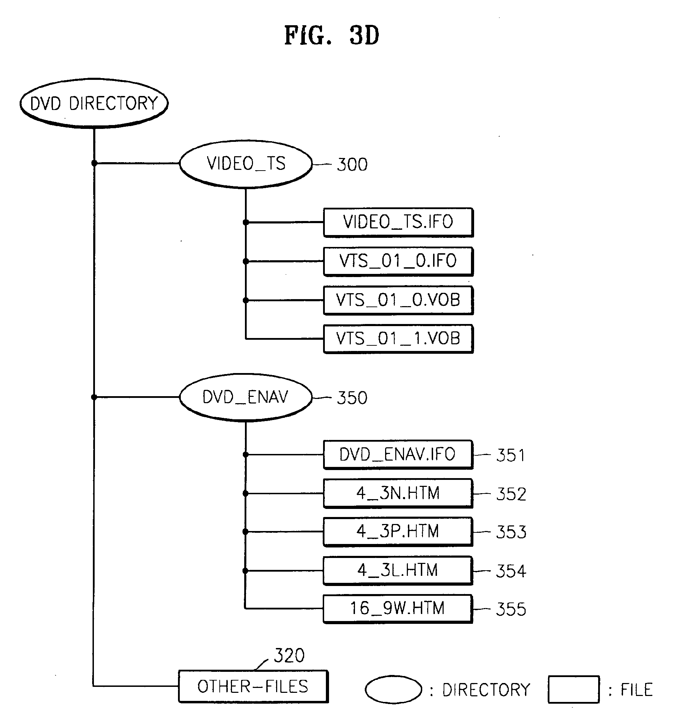

Figure 3D is a view of a fourth embodiment of the directory structure of the storage medium (e.g., DVD) that supports changes in a screen aspect ratio according to the present invention. Referring to Figure 3D, the storage medium has a directory structure, which is represented by a digital versatile disc (DVD). The storage medium includes a video directory 300, an interactive directory 350, and other-files 320. The video directory 300 has video/audio contents related to screen display information and information files therefor. The interactive directory 350 includes files which are of markup language-based (such as hypertext markup language (HTML)) documents and enable to constitute a user interactive screen such as a browser screen. The other-files 320 store other information.

The video directory 300 and the other-files 320 are the same as those described with reference to Figure 3A, and thus only the interactive directory 350 will be described.

The interactive directory 350 includes a screen information file DVD_ENAV.IFO 351 and interactive screen mode files that adjust a picture to screens having different screen aspect ratios. These interactive screen mode files are a 4_3N.HTM 352, a 4_3P.HTM 353, a 4_3L.HTM 354, and a 16_9W.HTM 355.

The DVD_ENAV.IFO 351 is first read when the reproducer reproduces an interactive screen and includes information on screen aspect ratios when constituting the interactive screen. The reproducer searches for corresponding one of screen mode files, based information on the screen aspect ratios in the DVD_ENAV.IFO 351 to constitute the interactive screen.

The 4_3N.HTM 352 is a file that adjusts an interactive screen to a general screen having a 4:3 screen aspect ratio.

The 4_3P.HTM 353 is a file that adjusts a 16:9 interactive screen to a 4:3 screen by cutting unnecessary both sides of the 16:9 picture.

The 4_3L.HTM 354 is a file that adjusts a 16:9 interactive picture to a 4:3 screen.

The 16_9W.HTM 355 is a file that adjusts an interactive screen to a 16:9 screen.

The above-described screen mode files include link tag information therein that is linked to other screen mode files so that an aspect ratio of the interactive screen can be changed to another aspect ratio. For example, the 4_3N.HTM 352 has to include the following link tags therein.
<link rel = "aspect_ratio_43P" src = "dvd://dvd_enav/4_3P.HTM">
<link rel = "aspect_ratio_43L" src = "dvd://dvd_enav/4_3L.HTM">
<link rel = "aspect_ratio_169W" src = "dvd://dvd_enav/16_9W.HTM">

A user can change an interactive screen mode in an interactive screen constituted by the 4_3N.HTM 352 to a 4:3P, a 4:3L, or a 16:9W interactive screen mode by using the link tags. In other words, when the user selects "aspect_ration_169W" from the link tags, a current interactive screen mode can be reconstituted by the 16_9W.HTM file.

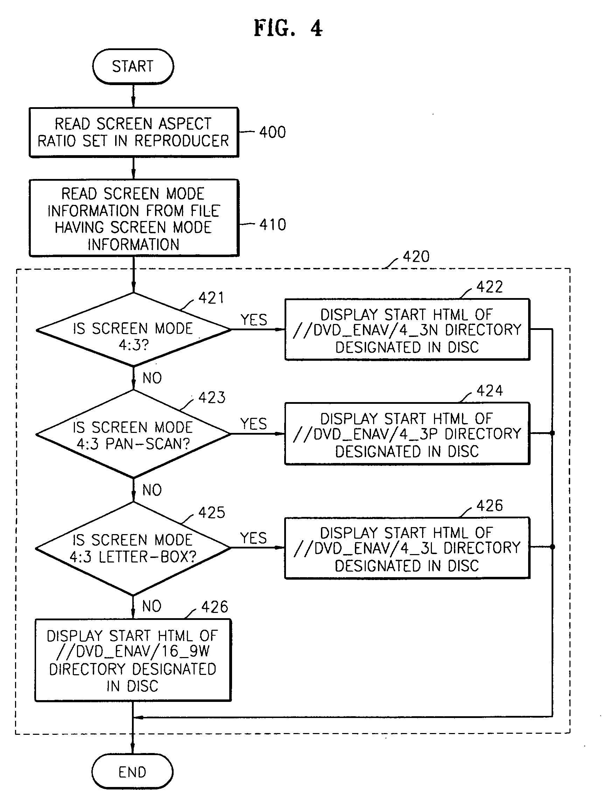

Figure 4 is a flowchart of a method of reproducing the storage medium having the directory structure shown in Figures 3A or 3C. Referring to Figure 4, in step 400, a reproducer reads a screen aspect ratio that is set therein when reproducing the storage medium.

In step 410, the reproducer reads screen mode information from the storage medium. In the case of Figure 3A, the reproducer searches directories having screen aspect ratio (screen modes) designated in the file DVD_ENAV.IFO having screen mode configuration information from the storage medium and reads an interactive display file in one of the directories. In the case of Figure 3C, the reproducer searches files having screen aspect ratios designated in the file DVD_ENAV.IFO including screen mode information and reads one of the files.

In step 420, the reproducer displays an interactive screen based on the read interactive display file.

Step 420 may include sequential steps of searching screen modes. For example, in the case of the storage medium having the directory structure shown in Figure 3A, in step 421, the reproducer determines whether a screen mode set in the reproducer is a 4:3 mode in order to display an interactive screen. If the screen mode is the 4:3 mode, in step 422, a markup language document, which is designated in a //DVD_ENAV/4_3N directory as shown in Figure 3A, is read from the storage medium and displayed on a screen. If the screen mode is not the 4:3 mode, the reproducer determines, in step 423, whether the screen mode is a 4:3 pan-scan mode. If the screen mode is the 4:3 pan-scan mode, in step 424, a markup language document, which is designated in a //DVD_ENAV/4_3P directory, is read from the storage medium and displayed on the screen. If the screen mode is not the 4:3 pan-scan mode, the reproducer checks, in step 425, whether or not the screen mode is a 4:3 letter-box mode. If the screen mode is the 4:3 letter-box mode, in step 426, a markup language document, which is designated in a //DVD_ENAV/4_3L directory, is read from the storage medium and displayed on the screen. If the screen mode is not the 4:3 letter-box mode, in step 427, a markup language document, which is designated in a //DVD_ENAV/16_9W directory, is read from the storage medium and displayed on the screen. In the flowchart shown in Figure 4, the above steps may be repeated when a user selects another screen mode or established screen mode in a reproducer is changed. A step of searching a corresponding mode from the storage medium and displaying a screen according to the corresponding mode may further be included, when the user changes the screen mode (aspect ratio) or the screen mode set in the reproducer is changed.

The above-described screen mode information may include the directory path information of screen display files pertaining to the screen structure, or the information for indicating either support or no support of each mode as to the screen structure.

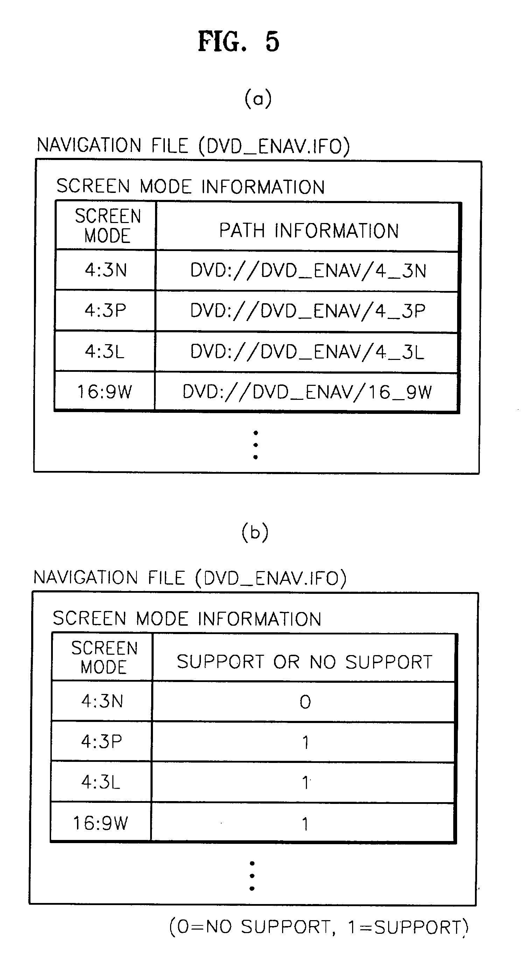

Figures 5(a) and (b) show examples in which screen mode information (a navigation file represented by DVD_ENAV.IF0 of Figure 3) provides directory path information of screen modes and either support or no support of the screen modes.

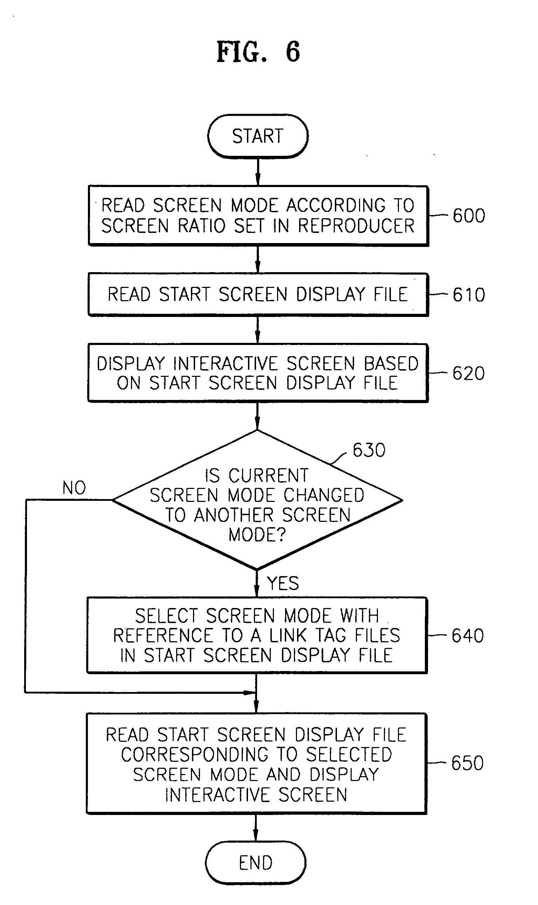

Figure 6 is a flowchart of a method of reproducing the storage medium, having its structure shown in Figure 3 according to a second embodiment of the present invention.

In step 600, a screen mode, which is set by a user or in a reproducer, is read. In step 610, a start interactive screen display file suitable for the screen mode set in the reproducer is read from the storage medium. In the case of the storage medium having the directory structure shown in Figure 3A or 3D, the start interactive screen display file is selected from files designated in the DVD_ENAV.IFO file. In the case of the storage medium having the structure shown in Figure 3B, the start interactive screen display file corresponds to a screen mode preset by the user or in the reproducer in step 600. In other words, if the screen mode set by the user is a 4:3P mode, a 4_3P.HTM file corresponding to the 4:3P mode is read. In the case of the storage medium having the structure shown in Figure 3C, the start interactive screen display file is a screen display file in a directory corresponding to the screen mode preset by the user or in the reproducer in step 600. In other words, if the screen mode set by the user is a 16:9W mode, a 16_9W directory corresponding to the 16:9W mode is selected, and thus a screen display file in the 16_9W directory is read.

In the case of the storage medium having the directory structure shown in Figure 3A or 3D, the start interactive screen display file DVD_ENAV.IFO includes the following link tag forms to be linked to another screen mode (source) files each being able to constitute an interactive screen corresponding to its own screen mode (screen aspect ratios).
<link rel = "aspect_ratio_43N" src = "dvd://dvd_enav/4_3N.HTM">
<link rel = "aspect_ratio_43P" src = "dvd://dvd_enav/4_3P.HTM">
<link rel = "aspect_ratio_43L" src = "dvd://dvd_enav/4_3L.HTM">
<link rel = "aspect_ratio_169W" src = "dvd://dvd_enav/16_9W.HTM">

In the case of the storage medium having the directory structure shown in Figure 3D, the screen mode (source) files 4_3N.HTM, 4_3P.HTM, 4_3P.HTM, 4_3L.HTM, and 16_9W.HTM include link tags to be linked to the other screen mode source files except their own source so as to change another screen mode. For example, the 4_3N.HTM file has to include the following link tags so as to change a screen mode thereof to one of the other screen modes.
<link rel = "aspect_ratio_43P" src = "dvd://dvd_enav/4_3P.HTM">
<link rel = "aspect_ratio_43L" src = "dvd://dvd_enav/4_3L.HTM">
<link rel = "aspect_ratio_169W" src = "dvd://dvd_enav/16_9W.HTM">

As in the storage medium having the directory structure shown in Figure 3B or 3C, the screen display files preset and searched in the reproducer include link tags to which paths of the other screen mode display source files are linked to change a screen mode to another screen mode.

In step 620, an interactive screen is displayed based on the start screen display file read in step 610. When changing a screen aspect ratio mode of the interactive screen to another screen aspect ratio mode in step 630, a link tag is selected in the displayed interactive screen in step 640 and a change to another screen mode is possible in step 650.

A file (e.g., A.HTM) included in the 4:3 screen mode directory 311 of Figure 3 will now be described.

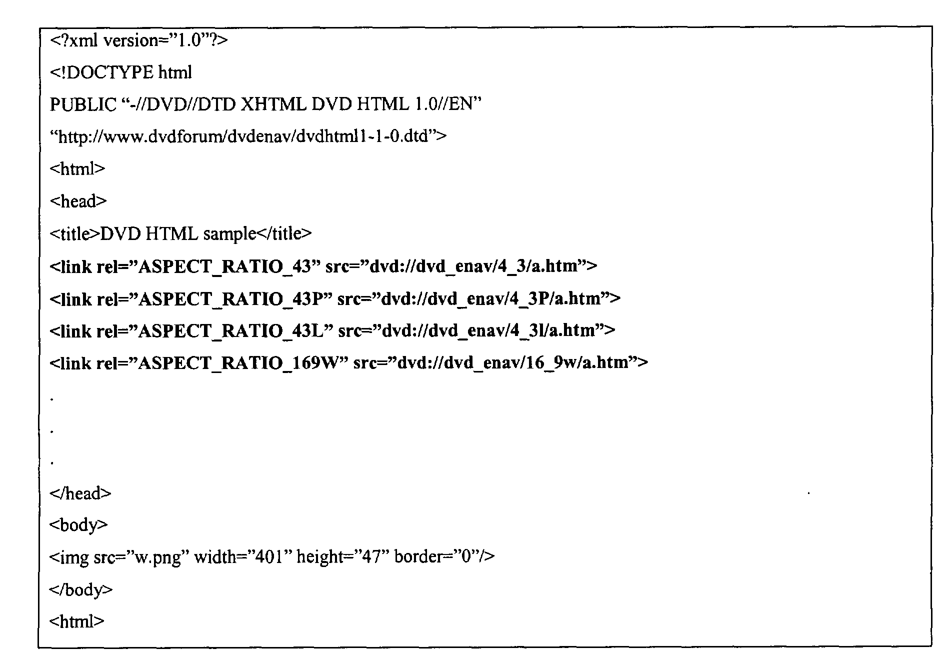

In the above example, the bolded parts are link tags in an A.htm file and each have a screen mode name to be displayed and a pathname of a screen display file that is linked to the screen mode name.

In the above case, all possible screen modes are displayed in the link tag form in one screen. In another case, screen display files of each mode may include links to another screen mode display files. Thus, each of the screen modes can be changed into another screen mode.

As described above, interactive information in a storage medium is constituted to be adjusted to different screen aspect ratios. Thus, interactive information can be displayed without distorting the position and size thereof even when a screen of a predetermined size is changed into another screen of a different size. Also, the same interactive file name is used in each directory corresponding to each screen aspect ratio and a function of linking to another screen aspect ratio file is provided in each screen aspect ratio file, which results in an easy transition from one screen mode to another.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A storage medium providing various information and audio/video contents that are displayable in a user interactive environment, the storage medium comprising:
interactive screen display files (331-334) that correspond to different screen aspect ratios, respectively, wherein the interactive screen display files (331-334) are constituted to be adjusted to corresponding screen aspect ratios.

2. The storage medium of claim 1, comprising a screen information file (351) which provides interactive screen information including displayable screen aspect ratio information.

3. The storage medium of claim 1 or 2, wherein each interactive screen display file (331,334) includes link tags which are linked to the other interactive screen display files, so that a screen aspect ratio mode being displayed is readily changeable to another aspect screen aspect ratio mode.

4. The storage medium of any preceding claim, wherein the interactive screen display files (331-334) are constituted in the forms that are respectively displayable in a 16:9 screen, 4:3 screen, 4:3 letter-box screen, and 4:3 pan-scan screen.

5. The storage medium of any preceding claim, wherein the interactive screen display files (331-334) are markup language-based document files.

6. The storage medium of any preceding claim, wherein the storage medium comprises directories (311-314) which respectively correspond to different screen aspect ratios, each directory containing one or more of the interactive screen display files constituted to be adjusted to the screen aspect ratio of the directory (311-314) containing the interactive screen display file.

7. The storage medium of claim 6, wherein the directories (311-314) are for a 16:9 screen, a 4:3 screen, a 4:3 letter-box screen, and a 4:3 pan-scan screen, respectively.

8. The storage medium of claim 6 or 7, wherein screen display files in the directories have the same file name.

9. The storage medium of any preceding claim, wherein the storage medium is arranged such that, in use, an interactive screen display file predetermined in a reproducer is searched from amongst the interactive screen display files (331-334) to constitute an interactive screen that is suitable for a screen aspect ratio corresponding to the searched screen aspect ratio.

10. The storage medium of claim 6, 7 or 8, wherein the storage medium is arranged such that in use a directory having a screen aspect ratio predetermined in a reproducer is searched from the directories, a interactive screen file is read from the searched directory, and an interactive screen suitable for an aspect ratio corresponding to the predetermined screen aspect ratio is constituted from the read screen display file.

11. A method of reproducing a storage medium including screen display files (331-334) which realize interactive environments so as to be adjusted to various screen sizes, the method comprising:
(a) reading a display screen aspect ratio set in a reproducer; and
(b) reading a screen display file (331-334) having the screen aspect ratio from the storage medium and displaying an interactive screen based on the screen display file.

12. The method of claim 11, wherein step (b) comprises:
(b-1) reading a screen information file from the storage medium;
(b-2) searching a screen aspect ratio directory having a screen aspect ratio set in the reproducer from the screen information file; and
(b-2) reading a screen display file in the searched screen aspect ratio directory and displaying an interactive screen based on the screen display file.

13. The method of claim 11 or 12, wherein in step (b), the screen display file set in the reproducer is searched and read from the storage medium and an interactive screen is displayed based on the screen display file name (331-334).

14. The method of any of claims 11 to 13, wherein step (b) further comprises:
(b-4) searching a screen mode directory (311-314) set in the reproducer from the storage medium; and
(b-5) reading a screen display file in the searched screen mode directory (311-314) and displaying an interactive screen based on the screen mode directory.

15. The method of any of claims 11 to 14, wherein step (b) further comprises:
(b-6) reading a screen information file (351) from the storage medium; and
(b-7) searching and reading a screen aspect ratio file (352-355) having a screen aspect ratio set in the reproducer from the screen information file and displaying an interactive screen based on the screen aspect ratio file.

16. The method of any of claims 11 to 15, wherein the screen display files (331-334, 352-355) have forms which each display interactive information on a 4:3 screen, a 4:3 letter-box screen, and a 4:3 pan-scan screen.

17. The method of any of claims 11 to 16, wherein each screen display file (331-334) includes link tags which are linked to the other screen aspect ratio files having the other screen aspect ratio modes so that a screen aspect ratio mode being displayed is changed to another screen aspect ratio mode.
